# EUROPEAN PATENT SPECIFICATION

(11) **EP 3 475 247 B1**
(45) Date of publication and mention of the grant of the patent: **11.08.2021**
(21) Application number: 17730192.6
(22) Date of filing: 19.06.2017
(51) Int. Cl.: C04B 37/02, B32B 18/00, F27B 14/10, C01D 15/00, C01F 7/00, C01G 45/12, C01G 51/00, C01G 53/00, H01M 4/505, H01M 4/525

(54) **OPEN VESSELS AND THEIR USE**
OFFENE GEFÄSSE UND DEREN VERWENDUNG
RÉCIPIENTS OUVERTS ET LEUR UTILISATION

(30) Priority: 24.06.2016 EP 16176216
(43) Date of publication of application: 01.05.2019
(73) Proprietor: BASF SE, 67056 Ludwigshafen am Rhein (DE)
(72) Inventor: KALO, Benedikt, 67056 Ludwigshafen (DE); DALOZ, William, Beachwood,OH 44122 (US); PANCHULA, Martin Lawrence, Beachwood, OH 44122 (US)
(74) Representative: BASF IP Association
(86) International application number: PCT/EP2017/064914
(87) International publication number: WO 2017/220484

(56) References cited:
- WO-A1-2010/049961
- WO-A1-2016/083185
- GB-A- 2 479 165
- US-A- 5 132 145
- US-A1- 2001 033 950

## Description

The present invention is directed towards vessels selected from crucibles, pans, open cups and saggars essentially comprising of two components, from which
(A) one component being a ceramic matrix composite, and
(B) the second component being from metal or alloy,
wherein the shapes of components (A) and (B) are different and wherein component (A) is the inner one, and wherein at least 90% by weight of such inventive vessels are either component (A) or component (B).

In addition, the present invention is directed towards the use of inventive vessels, and a method to manufacture inventive vessels.

Lithiated transition metal oxides are currently being used as cathode active materials for lithium-ion batteries. Extensive research and developmental work has been performed in the past years to improve properties like charge density, energy, but also other properties like the reduced cycle life and capacity loss that may adversely affect the lifetime or applicability of a lithium-ion battery. Additional work has been spent to improve manufacturing methods.

In a usual process for making cathode materials for lithium-ion batteries, first a so-called precursor is being formed by co-precipitating the transition metals as carbonates, oxides or preferably as hydroxides that may or may not be basic. The precursor is then mixed with a lithium salt such as, but not limited to LiOH, Li₂O, LiNO₃ or - especially - Li₂CO₃ - and calcined (fired) at high temperatures. Lithium salt(s) can be employed as hydrate(s) or in dehydrated form. The calcination - or firing - generally also being referred to as thermal treatment of the precursor is usually carried out at temperatures in the range of from 600 to 1,000 °C. During the thermal treatment a solid state reaction takes place, and the cathode active material is formed. The thermal treatment is performed in the heating zone of an oven or kiln.

Two general types of achieving the transportation of the precursor into the heating zone - and removal of the cathode active material from the heating zone - are most widely used. One type is to move a stream of powder through the heating zone, for example in a rotary kiln. Rotary kilns have the challenge, though, that the strongly corrosive precursor may damage the kiln material.

In addition, rotary kilns are quite disadvantageous for multi-product facilities where cross contamination may be of concern.

Another type of methods comprises the steps of putting the precursor into vessels, for example crucibles or saggars, and moving such vessels through the heating zone of an oven or of a kiln. The method quite comfortably allows product changes for multi-product facilities. Although the extent of effects of corrosion is reduced, this method has a common disadvantage due to the long time needed for heating the vessel. Usually, such vessels are made from a ceramic material. Such ceramic materials tend to behave as thermal insulating material. Precursor next to the walls of the vessels or in the core of the bulk take longer to heat than the upper surface, and therefore may require much longer reaction times. Furthermore, in order to avoid damage to the ceramic vessels, for example by thermal shock, they can only be heated slowly. Typical heating rates are in the range of from 1 to 3°C/min. The same challenge applies to cooling after the thermal treatment. Much space is needed in production facilities to achieve a crack-free heating and cooling.

In US 5,132,145, crucibles for making single crystalline materials are disclosed. In WO 2016/083185, a process for making lithiated transition metal oxides is disclosed that makes use of a multi-stage fluidized bed reactor.

Some materials, such as certain ceramic matrix composites, do not have the same heating and cooling rate limitations. Saggars made entirely from ceramic matrix composites might be used but the costs for ceramic matrix composites are usually quite high. Saggars made from metal, which also do not require slow heating and cooling are often not sufficiently corrosion-resistant.

It was therefore an objective to provide a method for making oxide materials that can be utilized in contact with corrosive materials and allows for higher conversions in a given heating process. It was further an objective to provide the necessary equipment for such process.

Accordingly, the process defined at the outset has been found, hereinafter also referred to as inventive process or process according to the (present) invention. In addition, the open vessels defined at the outset have been found, hereinafter also referred to as inventive vessels or vessels according to the present invention. Inventive vessels will be defined in more details below.

Inventive vessels are selected from crucibles, pans, open cups and saggars. Inventive vessels are preferably open, that means in the context of the present invention that they do not have a lid. In some embodiments inventive vessels have one or more handles, but preferably they do not.

In the context of the present invention, pans and open cups each have a circular base, and they are better distinguished by the dimensions. In pans, the walls are up to 25% of the diameter of the base, for example 5 to 25%, and in open cups, the walls are from 26 to 300% of the diameter of the base.

Inventive vessels comprise of two components,
(A) one component being a ceramic matrix composite, hereinafter also referred to as component (A) or matrix composite (A), and
(B) the second component being from metal or alloy, hereinafter also referred to as component (B),
wherein the shapes of components (A) and (B) are different and wherein component (A) is the inner one, and wherein at least 90% by weight of such inventive vessels are either component (A) or component (B).

The two components (A) and (B) are explained in more detail below.

In a preferred embodiment of the present invention, components other than component (A) or component (B) amount to zero to 5% by weight of inventive vessels. Examples of - optional - components other than component (A) and component (B) are referred to as component (C). Examples of components (C) are intermediate layers serving as bonding material between components (A) and (B). Another example of an optional component (C) is a coating or layer that enhances thermal transition. Another example of an optional component (C) is a sealing layer that allows for handling of partly or completely molten material. In an even more preferred embodiment of the present invention, inventive vessels consist of component (A) and component (B).

In embodiments wherein inventive vessels comprise components other than component (A) and component (B), such components other than component (A) and component (B) exhibit high thermostability. For example, their melting temperature and softening temperature, if applicable, is higher than 1,100°C, for example from 1,200 to 3,000°C.

Additionally, inventive vessels comprise of a ceramic matrix composite (A). Said ceramic matrix composite (A) contains ceramic fibers, and it additionally comprises a ceramic matrix material, also referred to as ceramic matrix. Ceramic fibers and ceramic matrix may have identical or different composition. In the context of the present invention, ceramic matrix composites (A) comprise fibers embedded in ceramic oxide or non-oxide matrices. The bonding forces between the fibers and the matrix are comparatively low. Oxide matrix materials such as aluminum oxide are preferably in particulate form.

Ceramic fibers and ceramic matrix materials may each be selected from oxide and non-oxide ceramics. Examples of non-oxide ceramics are carbides and borides and nitrides and oxynitrides. Particular examples of non-oxide ceramics are silicon carbide, silicon boride, silicon nitride, silicon oxynitride, silicon boron nitride, hereinafter also referred to as SiBN, silicon carbon nitride, hereinafter also referred to as SiCN, and in particular combinations from SiC and Si₃N₄. Preferred are oxide ceramics, hereinafter also referred to as oxide-based ceramics. Oxide ceramics are oxides of at least one element selected from Be, Mg, Ca, Sr, Ba, rare earth metals, Ti, Zr, Hf, V, Nb, Ta, Cr, Mo, W, Mn, Fe, Co, Ni, Zn, B, Al, Ga, Si, Ge, Sn, Re, Ru, Os, Ir, In, Y, and mixtures of at least two of the foregoing. Oxide-based ceramics may be selected from doped ceramics, wherein one main component is doped with up to 1 molar % components other than the main component, and from enforced ceramics, wherein one component is the main component, for example at least 50 molar %, and one or more further components - reinforcing components - are present in ranges from 1.1 to 25 molar %. Further examples are titanates and silicates.

Preferred example of titanates is aluminum titanate. Preferred example of silicates is magnesium silicate.

Examples of enforced ceramics are reinforced alumina and reinforced zirconia. They may contain two or more different reinforcement oxides and may thus be referred to as binary or ternary mixtures. The following binary and ternary mixtures are preferred: aluminum oxide enforced with 1.1 to 25% by weight of one of the following: cerium oxide CeO₂, ytterbium oxide Yb₂O₃, magnesia MgO, calcium oxide CaO, scandium oxide SC₂O₃, zirconia ZrO₂, yttrium oxide Y₂O₃, boron oxide B₂O₃, combinations from SiC and Al₂O₃, or aluminum titanate. More preferred reinforcing components are B₂O₃, ZrO₂ and Y₂O₃.

Preferred zirconia-reinforced alumina is Al₂O₃ with from 10 to 20 mole-% ZrO₂. Preferred examples of reinforced zirconia are selected from ZrO₂ enforced with from 10 to 20 mole-% CaO, in particular 16 mole-%, from 10 to 20 mole-% MgO, preferably 16 mole-%, or from 5 to 10 mole-% Y₂O₃, preferably 8 mole-%, or from 1 to 5 mole-% Y₂O₃, preferably 4 mole-%. An example of a preferred ternary mixture is 80 mole-% Al₂O₃, 18.4 mole-% ZrO₂ and 1.6 mole-% Y₂O₃.

Preferred fiber materials are oxide ceramic materials, carbide ceramic materials, nitride ceramic materials, carbon fibers, SiBCN fibers, basalt, boron nitride, tungsten carbide, aluminum nitride, titania, barium titanate, lead zirconate-titanate and boron carbide. Even more preferred fiber materials are Al₂O₃, mullite, SiC, ZrO₂ and carbon fibers.

In one embodiment of the present invention component (A) comprises fibers from silicon carbide, silicon nitride, silicon oxynitride, carbon fiber or combinations thereof and a ceramic selected from SiC, silicon nitride, silicon oxynitride, aluminum oxide, silica, mullite, cordierite, spinel and combinations of at least two of the foregoing.

In one embodiment of the present invention the fibers are made from aluminum oxide, and the ceramic matrix composite comprises a ceramic matrix material selected from aluminum oxide, silicate, mullite, spinel, cordierite and combinations of at least two of the foregoing. Preferred is aluminum oxide.

Preferred are creep resistant fibers. In the context of the present invention, creep resistant fibers are fibers that exhibit minimum - or no - permanent elongation or other permanent deformation at temperatures up to 1,400°C

In one embodiment of the present invention, ceramic fibers may have a diameter in the range of from 7 to 12 µm. Their length may be in the range of from 1 mm up to 1 km or even longer, so-called endless fibers. In one embodiment, several fibers are combined with each other to yarns, textile strips, hoses, or the like. In a preferred embodiment ceramic fibers used in the present invention have a tensile strength of at least 50 MPa, preferably at least 70 MPa, more preferably at least 100 MPa, and even more preferably at least 120 MPa. A maximum value of the tensile strength of ceramic fibers used in the present invention is 3,100 MPa or even 10,000 MPa. The tensile strength may be determined with a tensile tester. Typical measuring conditions are cross-head speeds of 1.2 to 1.3 cm/min, for example 1.27 cm/min, and 7.61 cm gauge.

In one embodiment of the present invention, the matrix is made from an oxide ceramic or a carbide. Preferred oxide ceramic materials for the matrix are Al₂O₃, mullite, SiC, ZrO₂ and spinel, MgAl₂O₄.

Particularly preferred components are SiC/SiC, C/SiC, ZrO₂/ZrO₂, ZrO₂/Al₂O₃, Al₂O₃/ZrO₂, Al₂O₃/Al₂O₃ and mullite/mullite. The fiber material is in each foregoing case the first and the matrix the second material.

In one embodiment of the present invention, component (A) comprises 20 to 60 % by volume ceramic fiber.

Component (A) is porous. In many cases, it consists of 50 to 80% ceramic matrix composite in total, the rest is gas, for example air (porosity).

In one embodiment of the present invention, component (A) has a porosity in the range of from 20 % to 50 %; thus, component (A) is not gas tight in the sense of DIN 623-2.

In one embodiment of the present invention, the ceramic matrix composite (A) comprises fibers from aluminum oxide and a ceramic selected from aluminum oxide, quartz, mullite, cordierite and combinations of at least two of the foregoing, for example aluminum oxide and mullite or aluminum oxide and cordierite. Even more preferably, the ceramic matrix composite (A) comprises fibers from aluminum oxide and aluminum oxide ceramic.

In one embodiment of the present invention, the inner surface of component (A) appears smooth to the naked eye. In other embodiments, the inner surface of component (A) exhibits a certain roughness. Roughness in this context refers to a peak to valley height difference of up to 3 mm.

Component (B) is from metal or alloy. Useful metals are tungsten, molybdenum, iron, nickel, and titanium. Useful alloys are steels and cobalt refractory alloys. In a preferred embodiment, component (B) is made from steel, for example 300 series stainless steels, 304, 309 and 316. Examples of suitable steels are 1.46xx, 1.47xx and 1.48xx, cobalt-based allows such as Haynes 25, and nickel-based alloys of grade 2.48xx, in particular grade 1.48xxx grades 2.4856 and 2.4851. A further example of useful alloy is molybdenum titanium zirconium, in brief TZM.

In one embodiment of the present invention, component (B) is made from an alloy with a thermal conductivity in the range of from 15 to 35 W/mK at 1000°C.

In one embodiment of the present invention, component (A) of inventive vessels has an average wall thickness in the range of from 0.5 to 5 mm, preferably from 0.75 to 4 mm, more preferably from 1 to 3 mm. The base of component (A) in embodiments in which component (A) has a flat base, it may be of the same thickness or thicker or thinner, for example up to 10 mm, preferably 2 to 5 mm.

In one embodiment of the present invention, in component (A) the angle between each wall and the basis is 90°. In a preferred embodiment, component (A) has bent walls, and the angle between each wall and the basis is in the range of from 91 to 100°.

In a preferred embodiment of the present invention, inventive vessels may contain 100 ml up to 25 l of particulate material, preferred are 2 l to 20 l, and even more preferred are 3 to 15 l. Smaller vessels according to the present invention are possible, but they are economically disadvantageous. In state-of-the-art vessels the heat transfer may be disadvantageous in a way that the residence time in heating and/or cooling zones is unfavorably long or in way that pronounced temperature profiles in the powder to be thermally treated are observed that are in disfavor of a homogeneous product. If heat treatment is performed in inventive vessels, heat transfer is facilitated and accelerated. That leads to improved homogeneity of the heat-treated material.

Inventive vessels are advantageous for any solid state reaction to make oxide materials from a precursor in a solid state reaction. By using inventive vessels the shortcomings of the known processes discussed at the outset may readily be overcome. Exchange of product is easy, and heating and cooling before and after the thermal treatment may be performed at much faster a rate than with vessels known.

The shapes of components (A) and (B) are different.

Component (B) may have a base that is circular or ellipsoid or polygonal, for example rectangular or quadrangular. Preferred are rectangular and in particular quadrangular-base inventive vessels, for example rectangular and in particular square base vessels. Specific embodiments of quadrangular-base inventive vessels are those with rounded angles and especially inventive vessels with a square base with rounded angles.

Component (A) may have a base that is curcular or ellipsoid or polygonal, for example rectangular or quadrangular. Preferred are rectangular and in particular quadrangular-base inventive vessels, for example rectangular and in particular square base vessels, in those embodiments in which component (A) has a base. Component (A) may have no base at all, for example in embodiments in which component (A) has the shape of a hemisphere.

In one example of differently shaped components (A) and (B), components (A) and (B) each have the shape of a cup or crucible or saggar or open pan, but one has a spheroidal base and the other has, for example, a square-shaped base.

In another embodiment of the present invention, component (A) itself has the shape of a cup or crucible or saggar or open pan but component (B) is a body that has open sides or partially open sides, for example like a net or a cage or a belt, or like a ring or disc with vertical and, optionally, with horizontal bars or struts.

In one embodiment of the present invention, component (A) is placed into component (B) without any means for fastening. In other embodiments, component (A) is connected with component (B) through one or more means for fastening, for example one or more screws or bolts.

In one embodiment of the present invention, inventive vessels comprise an additional component (C) selected from graphite and molybdenum foils and from coatings. Foils may have a thickness in the range of from 1 µm to 0.5 mm, coatings may have a thickness in the range of from 100 nm to 1 mm. Additional component (C) selected from graphite and molybdenum foils are preferably located between component (A) and component (B). Coatings on the outer surface of the component (A) may serve to enhance heat transfer (by radiation), coatings on the inner surface of component (A) may serve to avoid diffusion into component (A) or to ensure fluid tightness. Coatings may be selected from ceramics, glasses or carbon-based coatings. Preferred coatings on the inner surface of component (A) are silica, alumina, zirconia or yttria ceramics, or sodium silicate or quartz glass Additional components (C) selected from coatings are preferably located on the inner surface of component (A) or the outer surface of component (B).

Another aspect of the present invention is related to a process for making an inventive vessel, hereinafter also referred to as inventive manufacturing process or manufacturing process according to the present invention. The inventive process comprises of several steps, hereinafter also referred to as step (α), step (β) etc. that are explained in more detail below.

Steps of the inventive manufacturing process are
- (α): providing the respective green body of component (A),
- (β): providing component (B),
- (γ): optionally, pre-treating the green body of component (A) by vacuum treating, compressing or drying,
- (δ): firing the green body of component (A) or the pre-treated green body according to step (γ), if applicable,
- (ε): contacting component (B) either with the green body of component (A) before step (γ) or with the pre-treated green body according to step (γ) or component (A) after firing.

In step (α), a green body of component (A) is provided. The green body essentially comprises the non-fired matrix composite. The non-fired matrix composite contains fibers and ceramic material, and making such green body essentially comprises one or more steps of combining ceramic fibers - or carbon fibers - with a precursor of a ceramic material.

In one embodiment of step (α), the green body of component (A) is made by arranging a fabric around a shaped body wherein said fabric is made from ceramic fibers and soaked with a slurry of from a ceramic material or its precursor. In such embodiments, the shaped body preferably has the shape of component (A).

In one embodiment of step (α), the green body of component (A) is not finalized in shape, but put into final shape when contacting it with component (B).

The fabric may be a woven or non-woven structure from ceramic fibers. Even more preferred are unidirectionally oriented fibers or unidirectionally oriented rovings. Said fabric is soaked with a slurry containing a ceramic material or a ceramic precursor. Said soaking may be performed by moving the fabric through a bath containing said slurry. In other embodiments, said soaking may be performed statically. Said soaking may be performed once or repeated several times, for example up to 10 times.

The slurry contains a so-called ceramic precursor, for example aluminum hydroxide in a sol or gel state, water, and, optionally, a filler, for example an organic or inorganic acid. The solids content of said slurry may be in the range of from 10 to 80%, preferably 20 to 60%, and more preferably 25 to 45 %.

In one embodiment of the present invention, the average residence time of the fabric in said slurry is in the range of from 1 second to 24 hours, preferably 5 seconds to 10 hours, preferably 1 minute to 5 hours.

After having soaked the fabric with said slurry a prepreg is obtained. The prepreg is then, in some embodiments, contacted with the above shaped body. Said contacting is performed by arranging fabric on the outer surface the above shaped body in a way that the outer surface is partially or completely covered with at least one layer of soaked fabric. In case the soaking is performed repeatedly complete coverage may only be achieved after said repeated soaking. Said contacting may be performed with or without a lay-up. A green body is obtained that is then removed from the shaped body.

In another embodiment of step (α) the green body of component (A) is made by winding a roving, tow, filament or yarn around a shaped body wherein said roving, tow, filament or yarn is impregnated with a slurry of a ceramic material or its precursor. In such embodiments, the shaped body preferably has the shape of component (A).

For this purpose, said roving, yarn, tow or filament is moved through a slurry, for example pulled. Said slurry contains a so-called ceramic precursor, for example aluminum hydroxide in a sol or gel state, water, and optionally, a filler, *vide supra.* The solids content of said slurry may be in the range of from 10 to 80%, preferably 20 to 60%, more preferably 25 to 45 %.

The diameter of such roving, yarn, tow or filament may be in the range of from 0.1 to 5 mm, preferably 0.2 to 3 mm, more preferably 0.3 to 2 mm.

Said winding may include one or more layers, for example 2 to 10 layers of roving, tow or filament. Resulting from step (α) a green body is obtained that is then removed from the shaped body.

In step (β), component (B) is provided. Some embodiments of component (B) are commercially available, for example cups and saggars from steel. Other embodiments may be made by casting, welding, die cutting, or molding.

Before firing, the green body obtained according to step (α) may be pre-treated according to one or more optional steps (γ), for example vacuum treatment or pressing or drying, especially vacuum treatment or autoclave processing. Said optional steps may be performed to remove some percentage of water before firing. An optional drying step may be performed at a temperature in the range of from 10 °C to 300 °C, preferably 80 °C to 200 °C. Combined drying in ambient atmosphere and subsequently in an oven is preferred.

After step (β) and, if applicable, step (γ), the green body so obtained is fired, step (δ). Step (δ) may be performed by heat-treating the green body at a temperature in the range of from 800 to 1,500 °C, preferably 900 to 1,450°C, preferably 1,000 to 1,400 °C.

Step (δ) may be performed over a period of time in the range of from 10 minutes to 48 hours, preferably 30 minutes to 24 hours, preferably 1 hour to 10 hours. Dwells at different temperatures, with or without intermediate cooling, may be preferable.

After firing, component (A) is obtained. Component (A) is cooled down after firing.

Step (ε) includes contacting component (B) either with the green body of component (A) before step (γ) - if applicable - or with the pre-treated green body according to step (γ) or with component (A) after firing. Contacting component (B) with component (A) in its final form is preferred. Through such contacting inventive vessels are obtained. Depending on the means of fastening, if any, it is preferred to contact components (A) and (B) as late in the inventive manufacturing process as feasible, especially after cooling down after step (δ). As an element of step (ε), means for fastening such as screws r bolts are applied.

Another aspect of the present invention is related to a process for making an oxide material, hereinafter also referred to as inventive process or as process according to the (present) invention, said process comprising the following steps:
(a) providing a mixture of at least two solid particulate materials, of which at least one is an oxide or hydroxide or carbonate,
(b) moving said mixture in an inventive vessel through an appliance in which said mixture is subjected to a heat treatment, thereby reacting the particulate materials with each other,
(c) cooling down the material resulting from step (b).

In one embodiment of the present invention oxide materials are selected from cathode active materials, especially for lithium ion batteries. Examples of cathode active materials for lithium ion batteries are LiCoO₂, LiNiO₂, LiMnO₂, mixed transition metal oxides with a layered structure, also referred to as lithiated layered oxides, having the general formula Li_{(i+z)}[NiₐCo_{b}Mn_{c}]_{(1-z)}O₂₊ₑ wherein z is 0 to 0.3; a, b and c may be same or different and are selected from 0.0 to 0.8 wherein a + b + c = 1; and -0.1 ≤ e ≤ 0.1, lithiated spinels ("NMO"), for example manganese-containing spinels like LiMn₂O₄ and spinels of general formula Li₁₊ₜM₂₋ₜO_{4-d} wherein d is 0 to 0.4, t is 0 to 0.4 and M is a combination of Mn and at least one further metal selected from the group consisting of Co and Ni, and lithiated nickel-cobalt aluminum oxides ("NCA"), the latter being materials of general formula Li_{(1+g)}[NiₕCoᵢAlⱼ]_{(1-g)}O₂. Typical values for g, h, i, and j are: g from 0.0 to 0.1, h from 0.80 to 0.85, i = 0.15 to 0.20, and j = 0.02 to 0.03. In a preferred embodiment the cathode active material is selected from lithiated layered oxides, lithiated spinels and lithiated nickel-cobalt aluminum oxides.

In a special embodiment of the present invention, oxide materials are selected from LiCoO₂ coated layered nickel-cobalt-magnesium oxides, doped or non-doped, for example LiCoO₂ coated LiNi_{0.9}Co_{0.09}Mg_{0.01}O₂. Each thermal treatment step useful in making LiCoO₂ coated layered nickel-cobalt-magnesium oxides may be performed in inventive vessels.

The inventive process starts off from a mixture of at least two particulate materials, of which at least one is an oxide or hydroxide or carbonate, step (a). For example, one of the particulate materials is a lithium salt, preferably lithium oxide or lithium hydroxide or preferably lithium carbonate, Li₂CO₃, and one of the particulate materials is a so-called precursor, for example a hydroxide or oxide or oxyhydroxide or carbonate of a transition metal selected from Ni, Mn and Co, or a mixed hydroxide or oxide or oxyhydroxide or carbonate of at least two transition metals selected from at least two out of Ni, Mn and Co. In a preferred embodiment, one of the particulate materials is lithium carbonate and the other is a mixed oxyhydroxide of Ni, Co and Mn or of Ni, Co and Al.

In other embodiments, the inventive process starts from a so-called pre-calcinate, that is a mixture of a lithium compound and a pre-treated hydroxide.

In such particulate materials, the particles of the lithium salt and the precursor may each have an average particle diameter (D50) in the range of from 2 to 20 µm, preferably 5 to 15 µm. Lithium salt as used in step (a) of the inventive process preferably has an average particle diameter (D50) in the range of from 4 to 7 µm. It may be observed that in many embodiments of steps (a), agglomerates are formed that contain a plurality of particles selected from dried or dehydrated precursor and lithium salt.

The molar ratio of lithium to metals other than lithium may be selected within certain ranges, in case of lithiated spinels it is lithium : transition metal 1:2. In case of NCA it is from 1:1 up to 1.02:1, in case of lithiated layered oxides it is from 1:1 up to 1.86:1.

Lithium salt and precursor are mixed thoroughly and the resulting mixture is provided, step (a).

At the beginning of step (b), the mixture provided in step (a) is transferred into at least one inventive vessel. The inventive vessel - together with the mixture - is then moved through an appliance in which said mixture is subjected to a heat treatment, thereby reacting the particulate materials with each other. The reaction is a solid state reaction.

In one embodiment of the present invention the heat treatment in step (b) is performed at a temperature in the range of from 600 to 1,000 °C. Preferably, the temperature is ramped up, for example to a first heat treatment temperature in the range of from 600 to 650°C, then to a second heat treatment temperature in the range of from 700 to 750°C, and then to a third heat treatment temperature in the range of from 850 to 900°C. In one embodiment, the mixture is maintained at each heat treatment temperature for a period of 1 to 10 hours, preferably 3 to 8 hours.

In one embodiment of the present invention the appliance in step (b) is selected from roller hearth kilns, shuttle kilns, box furnaces, and tunnel kilns.

In one embodiment of the present invention the cooling step (c) or a heating phase in step (b) is performed at a rate in the range of from 1 to 50°C/min, preferred are 5 to 25°C/min.

Due to the good properties of the inventive vessels, a very homogeneous oxide material and specially cathode active material may be obtained according to the inventive process. The heating and cooling period is shorter due to an enhanced heating or cooling rate, and the turnover of inventive vessels in commercial scale processes may be enhanced compared to the turnover with vessels consisting of only one component. In addition, due to the good corrosion stability, no detectable amounts of inventive vessel materials can be found in cathode active materials made according to the inventive process.

## Claims

1. Vessel selected from crucibles, pans, open cups and saggars comprising of two components, from which
(A) one component being a ceramic matrix composite, and
(B) the second component being from metal or alloy,
wherein the shapes of components (A) and (B) are different and wherein component (A) is the inner one, and wherein at least 90% by weight of such vessels are either component (A) or component (B).

2. Vessel according to claim 1 wherein the ceramic matrix composite comprises fibers from silicon carbide, silicon nitride, silicon oxynitride, carbon fiber or combinations thereof and a ceramic selected from SiC, silicon nitride, silicon oxynitride, aluminum oxide, silica, mullite, cordierite, spinel and combinations of at least two of the foregoing.

3. Vessel according to claim 1 or 2 wherein the ceramic matrix composite comprises fibers from aluminum oxide or mullite or combinations thereof and a ceramic matrix selected from aluminum oxide, silica, mullite, cordierite, spinel and combinations of at least two of the foregoing.

4. Vessel according to any of the preceding claims wherein component (A) has an average wall thickness in the range of from 0.5 to 5 mm.

5. Vessel according to any of the preceding claims wherein component (A) has a square-shaped base.

6. Vessel according to any of the preceding claims wherein component (B) is made from an alloy with a thermal conductivity in the range of from 15 to 35 W/mK at 1000°C.

7. Vessel according to any of the preceding claims wherein component (B) is made from steel.

8. Vessel according to any of the preceding claims wherein said vessel comprises an additional component (C) selected from graphite and molybdenum foils and from coatings.

9. Process for manufacturing a vessel according to any of the preceding claims comprising the steps of
(α) providing the respective green body of component (A),
(β) providing component (B),
(γ) optionally, pre-treating the green body of component (A) by vacuum treating, compressing or drying,
(δ) firing the green body of component (A) or the pre-treated green body according to step (γ), if applicable,
(ε) contacting component (B) either with the green body of component (A) before step (γ) or with the pre-treated green body according to step (γ) or with component (A) after firing.

10. Process according to claim 9 wherein the green body of component (A) is made by arranging a fabric around a shaped body wherein said fabric is made from ceramic fibers and soaked with a slurry of from a ceramic material or its precursor.

11. Process according to claim 9 wherein the green body of component (A) is made by winding a roving, tow, filament or yarn around a shaped body wherein said roving, tow, filament or yarn is impregnated with a slurry of a ceramic material or its precursor.

12. Process for making an oxide material, said process comprising the following steps:
(a) providing a mixture of at least two solid particulate materials, of which at least one is an oxide or hydroxide or carbonate,
(b) moving said mixture in an open vessel according to any of claims 1 to 8 through an appliance in which said mixture is subjected to a heat treatment, thereby reacting the particulate materials with each other,
(c) cooling down the material resulting from step (b).

13. Process according to claim 12 wherein the oxide material is a cathode active material for lithium ion batteries selected from lithiated layered oxides, lithiated spinels (NMO), LiCoO₂ coated layered nickel-cobalt-magnesium oxides and lithiated nickel-cobalt aluminum oxides (NCA).

14. Process according to claim 12 or 13 wherein the cooling step (c) or a heating phase in step (b) is performed at a rate in the range of from 1 to 50°C/min.

## Patentansprüche

1. Aus Tiegeln, Pfannen, offenen Tassen und Schiffchen ausgewähltes Gefäß, das aus zwei Komponenten besteht, von denen
(A) eine Komponente ein keramischer Faserverbundwerkstoff ist und
(B) die zweite Komponente aus einem Metall oder einer Legierung ist,
wobei die Formen der Komponenten (A) und (B) voneinander verschieden sind und wobei Komponente (A) die Innenkomponente ist und wobei mindestens 90 Gew.-% von derartigen Gefäße entweder aus Komponente (A) oder Komponente (B) sind.

2. Gefäß nach Anspruch 1, wobei der keramische Faserverbundwerkstoff Fasern von Siliciumcarbid, Siliciumnitrid, Siliciumoxynitrid, Kohlenstofffaser oder Kombinationen davon und eine aus SiC, Siliciumnitrid, Siliciumoxynitrid, Aluminiumoxid, Siliciumdioxid, Mullit, Cordierit, Spinell und Kombinationen von mindestens zwei der Vorgenannten ausgewählte Keramik umfasst.

3. Gefäß nach Anspruch 1 oder 2, wobei der keramische Faserverbundwerkstoff Fasern von Aluminiumoxid oder Mullit oder Kombinationen davon und eine aus Aluminiumoxid, Siliciumdioxid, Mullit, Cordierit, Spinell und Kombinationen von mindestens zwei der Vorgenannten ausgewählte keramische Matrix umfasst.

4. Gefäß nach einem der vorhergehenden Ansprüche, wobei Komponente (A) eine durchschnittliche Wandstärke im Bereich von 0,5 bis 5 mm aufweist.

5. Gefäß nach einem der vorhergehenden Ansprüche, wobei Komponente (A) eine quadratisch geformte Grundfläche aufweist.

6. Gefäß nach einem der vorhergehenden Ansprüche, wobei Komponente (B) aus einer Legierung mit einer Wärmeleitfähigkeit im Bereich von 15 bis 35 W/mK bei 1000 °C hergestellt ist.

7. Gefäß nach einem der vorhergehenden Ansprüche, wobei Komponente (B) aus Stahl hergestellt ist.

8. Gefäß nach einem der vorhergehenden Ansprüche, wobei das Gefäß eine zusätzliche Komponente (C) umfasst, die aus Graphit- und Molybdänfolien und aus Beschichtungen ausgewählt ist.

9. Verfahren zur Fertigung eines Gefäßes nach einem der vorhergehenden Ansprüche, das die Schritte
(α) Bereitstellen des jeweiligen Grünlings von Komponente (A),
(β) Bereitstellen von Komponente (B),
(γ) gegebenenfalls Vorbehandeln des Grünlings von Komponente (A) durch Vakuumbehandeln, Pressen oder Trocknen,
(δ) Brennen des Grünlings von Komponente (A) oder, falls zutreffend, des vorbehandelten Grünlings gemäß Schritt (γ),
(ε) Inkontaktbringen von Komponente (B) entweder mit dem Grünling von Komponente (A) vor Schritt (γ) oder mit dem vorbehandelten Grünling gemäß Schritt (γ) oder mit Komponente (A) nach dem Brennen, umfasst.

10. Verfahren nach Anspruch 9, wobei der Grünling von Komponente (A) hergestellt wird, indem man ein Gebilde um einen Formkörper anordnet, wobei das Gebilde aus Keramikfasern hergestellt ist und mit einer Aufschlämmung von einem Keramikmaterial oder dessen Vorläufer getränkt ist.

11. Verfahren nach Anspruch 9, wobei der Grünling von Komponente (A) hergestellt wird, indem man ein Roving, Kabel, Filament oder Garn um einen Formkörper wickelt, wobei das Roving, Kabel, Filament oder Garn mit einer Aufschlämmung von einem Keramikmaterial oder dessen Vorläufer imprägniert ist.

12. Verfahren zur Herstellung eines Oxidmaterials, wobei das Verfahren die folgenden Schritte umfasst:
(a) Bereitstellen einer Mischung aus mindestens zwei festen teilchenförmigen Materialien, von denen mindestens eines ein Oxid oder Hydroxid oder Carbonat ist,
(b) Befördern der Mischung in einem offenen Gefäß nach einem der Ansprüche 1 bis 8 durch eine Vorrichtung, in der die Mischung einer Wärmebehandlung unterzogen wird, wodurch die teilchenförmigen Materialien miteinander umgesetzt werden,
(c) Abkühlung des aus Schritt (b) resultierenden Materials.

13. Verfahren nach Anspruch 12, wobei es sich bei dem Oxidmaterial um ein Kathodenaktivmaterial für Lithiumionenbatterien handelt, das aus lithiierten Schichtoxiden, lithiierten Spinellen (NMO), LiCoO₂-beschichteten Nickel-Cobalt-Magnesium-Schichtoxiden und lithiierten Nickel-Cobalt-Aluminium-Oxiden (NCA) ausgewählt ist.

14. Verfahren nach Anspruch 12 oder 13, wobei der Kühlschritt (c) oder eine Aufheizphase in Schritt (b) mit einer Rate im Bereich von 1 bis 50 °C/min durchgeführt wird.

## Revendications

1. Récipient choisi parmi des creusets, des casseroles, des tasses ouvertes et des saggars comprenant deux composants, parmi lesquels
(A) un composant est un composite de matrice de céramique, et
(B) le deuxième composant est de métal ou d'alliage, les formes des composants (A) et (B) étant différentes et le composant (A) étant celui à l'intérieur, et au moins 90 % en poids de tels récipients étant soit le composant (A), soit le composant (B).

2. Récipient selon la revendication 1, le composite de matrice de céramique comprenant des fibres de carbure de silicium, de nitrure de silicium, d'oxynitrure de silicium, de fibres de carbone ou de combinaisons correspondantes et une céramique choisie parmi SiC, le nitrure de silicium, l'oxynitrure de silicium, l'oxyde d'aluminium, la silice, la mullite, la cordiérite, le spinelle et des combinaisons d'au moins deux des précédents.

3. Récipient selon la revendication 1 ou 2, le composite de matrice de céramique comprenant des fibres d'oxyde d'aluminium ou de mullite ou des combinaisons correspondantes et une matrice de céramique choisie parmi l'oxyde d'aluminium, la silice, la mullite, la cordiérite, le spinelle et des combinaisons d'au moins deux des précédents.

4. Récipient selon l'une quelconque des revendications précédentes, le composant (A) possédant une épaisseur moyenne de paroi dans la plage allant de 0,5 à 5 mm.

5. Récipient selon l'une quelconque des revendications précédentes, le composant (A) possédant une base de forme carrée.

6. Récipient selon l'une quelconque des revendications précédentes, le composant (B) étant préparé à partir d'un alliage doté d'une conductivité thermique dans la plage allant de 15 à 35 W/mK à 1 000 °C.

7. Récipient selon l'une quelconque des revendications précédentes, le composant (B) étant préparé à partir d'acier.

8. Récipient selon l'une quelconque des revendications précédentes, ledit récipient comprenant un composant supplémentaire (C) choisi parmi des feuilles de graphite et de molybdène et parmi des revêtements.

9. Procédé pour la fabrication d'un récipient selon l'une quelconque des revendications précédentes comprenant les étapes de
(α) mise à disposition du corps vert respectif du composant (A),
(β) mise à disposition du composant (B),
(γ) éventuellement, pré-traitement du corps vert du composant (A) par un traitement sous vide, par compression ou par séchage,
(δ) cuisson du corps vert du composant (A) ou du corps vert pré-traité selon l'étape (γ), le cas échéant,
(ε) mise en contact du composant (B) soit avec le corps vert du composant (A) avant l'étape (γ), soit avec le corps vert pré-traité selon l'étape (γ), soit avec le composant (A) après la cuisson.

10. Procédé selon la revendication 9, le corps vert du composant (A) étant préparé par agencement d'un tissu autour d'un corps façonné, ledit tissu étant composé de fibres de céramique et imbibé d'une suspension d'un matériau de céramique ou de son précurseur.

11. Procédé selon la revendication 9, le corps vert du composant (A) étant préparé par enroulement d'une mèche, d'une étoupe, d'un filament ou d'un fil autour d'un corps façonné, ladite mèche, ladite étoupe, ledit filament ou ledit fil étant imprégné(e) avec une suspension d'un matériau de céramique ou de son précurseur.

12. Procédé pour la préparation d'un matériau d'oxyde, ledit procédé comprenant les étapes suivantes :
(a) mise à disposition d'un mélange d'au moins deux matériaux particulaires solides, parmi lesquels au moins l'un est un oxyde ou un hydroxyde ou un carbonate,
(b) déplacement dudit mélange dans un récipient ouvert selon l'une quelconque des revendications 1 à 8 par l'intermédiaire d'un appareil dans lequel ledit mélange est soumis à un traitement thermique, les matériaux particulaires réagissant ainsi les uns avec les autres,
(c) refroidissement du matériau résultant de l'étape (b) .

13. Procédé selon la revendication 12, le matériau d'oxyde étant un matériau actif de cathode pour des batteries lithium-ion choisi parmi des oxydes stratifiés lithiés, des spinelles lithiés (NMO), des oxydes de nickel-cobalt-magnésium stratifiés revêtus par LiCoO₂ et des oxydes d'aluminium nickel-cobalt lithiés (NCA).

14. Procédé selon la revendication 12 ou 13, l'étape de refroidissement (c) ou une phase de chauffage dans l'étape (b) étant réalisée à une vitesse dans la plage allant de 1 à 50 °C/min.
